# EUROPÄISCHE PATENTANMELDUNG

(11) **EP 0 610 521 A1**
(43) Veröffentlichungstag der Anmeldung: **17.08.1994**
(21) Anmeldenummer: 92811023.8
(22) Anmeldetag: 23.12.1992
(51) Int. Cl.: C10B 53/00, C04B 7/44

(54) **Verfahren zur Entsorgung von Sonderabfällen in einem Zementofen**

(71) Anmelder: VIGIER CEMENT AG, CH-4707 Deitingen/SO (CH)
(72) Erfinder: Brunner, Paul, Dr., CH-3053 Münchenbuchsee (CH)
(74) Vertreter: Fischer, Franz Josef

(57) **Zusammenfassung**

Sonderabfälle in flüssigem, pastösem oder festem Zustand, welche gegebenenfalls Schwermetalle enthalten, werden zu ihrer Entsorgung in einer ersten Stufe in einen Pyrolyseofen einer Pyrolyse unterworfen, wonach die Pyrolysegase direkt bei der Primärfeuerung in einen Zementofen eingeleitet werden. Dadurch wird erreicht, dass bei den Temperaturen von weit über 1'300°C im Zementofen sämtliche organische Verbindungen, welche umwelt- oder gesundheitsschädlich sein können, zerstört werden.

In einer besonderen Ausführungsform werden Produkte wie Kunststoffe, die Schwermetallverbindungen enthalten, entsorgt, wobei die Pyrolyse in Gegenwart einer Verbindung wie Schwefel, Selen oder Tellur, stattfindet. Dabei bleibt das Schwermetall weitgehendst als Rückstand im Pyrolyseofen zurück.

## Beschreibung

Die vorliegende Erfindung betrifft ein Verfahren zur Entsorgung von Sonderabfällen in Zementöfen, wobei die Sonderabfälle zuerst einer Pyrolyse unterworfen werden und anschliessend die Pyrolysegase in einen Zementofen eingeleitet werden.

Die umweltgerechte Entsorgung von Abfällen bereitet heute in den meisten Ländern der Welt echte Schwierigkeiten, da es an genügend Verbrennungs-oder Deponierungskapazität fehlt. Umweltgerecht heisst, dass die Verbrennungstemperatur mindestens 1300 °C betragen soll und die Verbrennungsdauer mindestens zwei Sekunden beträgt. Zudem müssen die entstehenden Abgase die verschiedenen Vorschriften der Emissions- sowie Immissionverordnungen erfüllen. In der Schweiz muss beispielsweise die Luftreinhalteverordnung von 1992 beachtet werden.

Die erwähnten hohen Temperaturen von mindestens 1300 °C werden heute von keiner Kehrichtsverbrennungsanlage erreicht, deshalb sind zur Entsorgung von Sonderabfällen spezielle Sonderverbrennungsöfen notwendig. Um die Emissionen unter den gesetzlichen Grenzwerten zu halten ist das Auswaschen der Rauchgase notwendig, das heisst die unerwünschten Schadstoffe werden im Wasser angereichert. Dieses Wasser muss nun nach bekannten Methoden aufgearbeitet werden, um die unerwünschten Schwermetalle auszufällen und zu isolieren.

Der Bau solcher Sonderverbrennungsöfen ist sehr kapitalintensiv und insofern zu einem Politikum geworden, weil sich die Bevölkerung gegen die Erstellung solcher Verbrennungsöfen wehrt.

Es ist allgemein bekannt, dass sich ein Zementofen mit Wärmetauscher aus folgenden Gründen zum Verbrennen von Sonderabfällen eignet.
- Die Flammtemperatur beträgt ca. 2000 °C
- Bei einer Flammenlänge von ca. 20 m beträgt die Verbrennungszeit mehr als zwei Sekunden. Somit werden alle organischen Moleküle zerstört.
- Die Schadstoffe (vor allem die Schwermetalle, ausgenommen Quecksilber) werden in den Klinker eingebaut. Eine Studie des schweizerischen Nationalfonds hat ergeben, dass die Einbindung in den Klinkermindestens 96 % (für Cadmium) beträgt.
- Bei einer Klinkerproduktion von über 1000 t/Tag werden die Schwermetalle sehrstarkverdünnt.

Nicht geeignet für die Verbrennung im Zementofen sind hochhalogenhaltigeAbfälle. Die Halogene als Kreislaufelemente können in zu hoher Konzentration den reibungslosen Betrieb eines Zementofens stören. Es gibt genügend Literatur, die die Entsorgung von Müll oder Sondermüll beschreibt. Davon werden einige Publikationen erwähnt: B. Krogbeumler, Verbrennung PCB-haltiger Altöle im Zementdrehofen IKG 41 (1988) 4 188-191; Gerger, Thermische Verwertung von Sekundärbrennnnstoffen bei den Gmunder Zementwerken ZKG 44 (1991) 9457-462; Kreft, Entsorgung im Zementwerk, Entsorgungspraxis 9/88 S. 360-368; Hansen, New way to burn hazardous waste Rock Products April 1990 S. 41.

Schwierigkeiten bei der Entsorgung der Abfälle im Zementofen verursacht im allgemeinen die Zugabe zum Zementofen. Problemlos ist sie bei flüssigen Abfallstoffen, schon wesentlich schwieriger bei festen Abfällen oder bei pastösen, d.h. nicht pumpbaren Sonderabfällen. Schwierig ist es auch inhomogene Abfälle zu dosieren und in den Ofen einzugeben. Grundsätzlich bestehen drei Möglichkeiten:
- Beim Primärbrenner direkt in die Flamme
- Beim Ofeneinlauf
- Stoffe in der Mitte des Ofens durch eine spezielle Vorrichtung einzugeben (US-A-4,850,290).

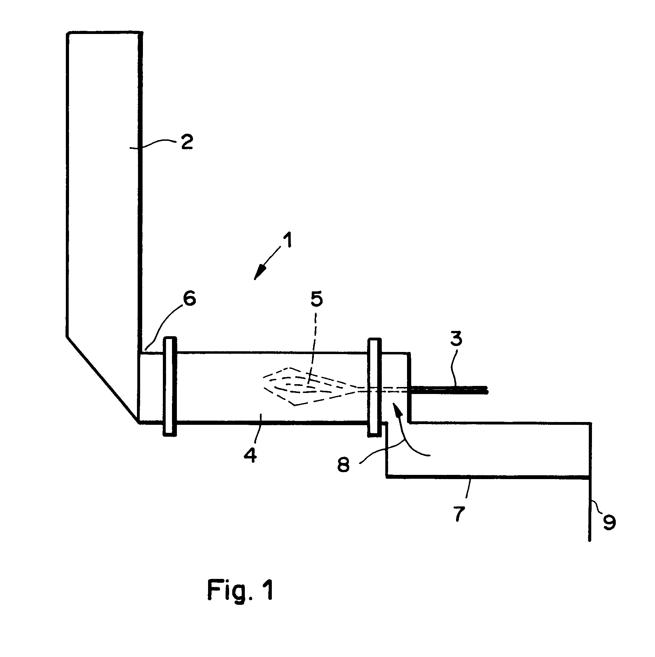

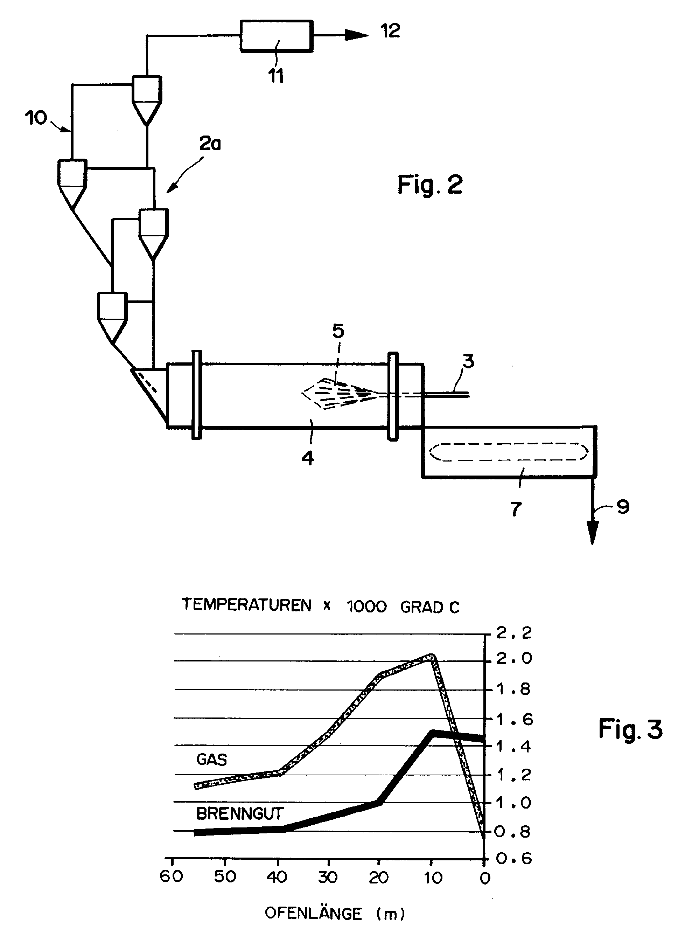

Bei einer Eingabe beim Primärbrenner (siehe die nachstehend erläuterten Fig. 1 und 2 mit schematischen Dartellungen eines Zementofens) können nur flüssige und pulverförmige Stoffe sowie Granulate eingegeben werden, die mit der Primärluft eingeblasen werden.

Bei einer Eingabe beim Ofeneinlauf (siehe Fig. 1 und 2); an dieser Stelle beträgt die Temperatur ca. 1'000 - 1'200 Grad C, erfüllt also die Forderung von 1'300 Grad C nicht mehr (vgl. Fig. 3). Ausserdem ist der Sauerstoffgehalt sehr niedrig und beträgt bis zu ca. 4 %. Aus diesem Grund findet in dieser Region kaum eine vollständige Verbrennung statt, sondern es kommt eher zu einer teilweisen thermischen Zersetzung der Abfälle- was durch ein Ansteigen des Kohlenmonoxides (CO) und CH-Verbindungen nachgewiesen kann. Dadurch werden die Emissionsgrenzen zum Teil unterschritten.

Eine andere Möglichkeit Abfälle zu entsorgen ist die Pyrolyse. Bei der Pyrolyse werden die Stoffe im Normalfall bei Temperaturen zwischen 400 - 700 °C vergast durch eine teilweise Verbrennung im Sauerstoffunterschuss.

Die Pyrolysegase werden anschliessend in einem Thermoreaktor bei Temperaturen zwischen 1'000-1'100 Grad C verbrannt und die entstehenden Rauchgase eventuell durch eine Wasserwäsche gereinigt. Die heute auf dem Markt erhältlichen Pyrolyseöfen erfüllen aberdie zwei wichtigsten Anforderungen nicht.
a) Die Verbrennungstemperatur erreicht nicht konstant 1300 °C
b) Die Verbrennungsdauer erreicht nie zwei Sekunden

Daher sind diese Öfen zur Entsorgung vom Sonderabfällen ungeeignet.

Es ist nun Aufgabe der vorliegenden Erfindung ein Verfahren zur Entsorgung von Sonderabfällen zur Verfügung zu stellen, das frei von den Unzulänglichkeiten der Nachteile der oben beschriebenen Verfahren ist und welches kostengünstig in bestehenden Zementöfen durgeführt werden kann.

Es wurde gefunden, dass eine Kombination der beiden Verfahren alle Vorteile ausnützen kann und für ein umweltgerechtes Entsorgen, das den gesetzlichen Bestimmungen der meisten Staaten entspricht, geeignet ist.

Gegenstand dervorliegenden Erfindung ist demzufolge das im Patentanspruch 1 definierte Verfahren.

Die vorliegende Erfindung wird anhand der beiliegenden Figuren näher erläutert. Es zeigt
Fig. 1 eine schematische Darstellung eines Zementofens 1, welcher einen Wärmetauscher 2 besitzt, welcher an der dem Primärbrenner 3 gegenüberliegenden Seite des Ofenraums 4 angeordnet ist. Die Zufuhr der Primärluft erfolgt beim Primärbrenner 3, wobei die Ofenflamme 5 gebildet wird. Der Ofeneingang 6 befindet sich an der Nahtstelle zwischen Wärmetauscher 2 und Ofenraum 4. Unterhalb des Brennerrohrs des Brenners 3 befindet sich ein Kühler 7, durch welchen einerseits Sekundärluft 8 angesogen wird und andererseits der Klinker durchtritt, um am Ende des Kühlers 7 beim Brenngutauslauf 9 auszutreten. Die Eingabe des Zementrohstoffes erfolgt über den Ofeneingang. Im erfindungsgemässen Verfahren werden die Pyrolysegase beim Primärbrenner 3 durch die Primärluft in den Ofen eingeleitet.
Fig. 2 ebenfalls eine schematische Darstellung eines analogen Zementofensystems. Für die Bezugszeichen wird auf Fig. 1 verwiesen. 2A ist hier jedoch ein Rohmehl-Wärmetauscher, wobei die Aufgabe an der Stelle 10 erfolgt und am Wärmetauscherein Filter 11 angeordnet ist, durch welches das Abgas 12 austritt.
Fig. 3 ein Diagramm, welches den Temperaturverlauf im Zementdrehofen zeigt. Darin wird deutlich, dass die Temperatur der Gase weit oberhalb der minimal erforderlichen 1'300 °C, im idealen Bereich um 2'000°C liegt.

Darin werden die Pyrolysegase von der Pyrolyseanlage direkt bei der Primärfeuerung in den Zementofen geleitet, wobei der Zementofen die Funktion eines Thermoreaktors übernimmt.

Damit können die nachstehenden Forderungen, die an ein umweltgerechtes Sondermüllentsorgungssystem gestellt werden, erfüllt werden:
- Verbrennungstemperatur ca. 2'000 °C - Verbrennungszeit > 2 sec
- Vollständige Zerstörung der organischen Substanz
- Einbau der Schwermetallionen in den Klinker (grosser Verdünnungseffekt)
- Keine unerlaubten Emissionen
- Rasche Verwirklichung bei günstigem Kapitaleinsatz
- Keine Wasserwäsche, d.h. auch kein Aufarbeiten von Abwässern

Unseres Wissens wird heute keine solche Kombination von Pyrolyse und Verbrennung zur Entsorgung von Sonderabfällen verwendet.

Bei einheitlichen Sonderabfällen, welche hohe Gehalte an schädlichen Schwermetallen wie Cadmium oder Quecksiber enthalten, hat es sich überraschenderweise als günstig erwiesen, dass dem Pyrolysegut während dem Pyrolyseverfahren unter Sauerstoffausschluss Schwefel, Selen oder Tellur in freier oder gebundener Form zugesetzt wird. Voraussetzung hierzu ist jedoch, dass die im Sondermüll enthaltenen Schwermetalle verhältnismässig stabile Verbindungen mit dem Schwefel, bzw. seinen analogen Elementen eingeht. Dadurch wird erreicht, dass die Verbindungen von Schwefel, Selen bzw. Tellur, mit dem Schwermetall im Pyrolyserückstand im Pyrolyseofen zurückbleiben und dadurch ein Eintrag der Schwermetalle in die Umwelt zusätzlich vermindert wird. Vorzugsweise wird in der Zuleitung des Pyrolysengases zum Zementofen ein mechanisches oder Elektrofilter eingebaut. Dadurch können erfahrungsgemäss ca. 99,5 % des schwermetallhaltigen Rückstandes zurückgehalten werden.

Die Temperatur im Pyrolyseofen beträgt vorzugsweise 400-500°C. Die Temperatur muss so eingestellt werden, dass sich die gebildeten Schwermetallverbindungen möglichst nicht verflüchtigen können. Wird bei der Zugabe Schwefel oder ein analoges Element frei oder gebunden zugegeben, wird in der Regel ebenfalls ein Schutzgas in den Pyrolyseofen eingeleitet. Typische Sonderabfälle, welche durch das genannte Verfahren in Gegenwart von Schwefel geeignet sind, sind z.B. ausgediente Getränkeharassen aus Polyethylen oder andere Produkte, welche durch Pigmente eingefärbt sind, welche Cadmium enthalten. Durch dieses Verfahren wird das Cadmium zum grössten Teil ausgeschieden, während ein möglicher Gehalt, welcher über das Pyrolysegas in den Zementofen gelangt, im Klinker in geringster Konzentration gebunden wird. In der Schweiz sind beispielsweise tausende von Tonnen derartiger Getränkeharassen im Umlauf, die in den nächsten Jahren entsorgt werden müssen.

Ein weiteres Problem besteht bei der Entsorgung von ausgedienten Belägen von Sportanlagen, welche Quecksilberverbindungen enthalten (Tartan®-Belä- ge). Auch die Entsorgung derartiger Abfälle kann durch Pyrolyse in Gegenwart von Schwefel oderAnalogen in freier oder gebundener Form erfolgen. Hier muss jedoch beachtet werden, dass die Pyrolyse bei der tiefstmöglichen Temperatur erfolgt, damit die gebildete Quecksilberverbindung, wie Quecksilbersulfid, zurückbleibt bzw. in einem Filter, das sich zwischen dem Pyrolyreofen und dem Zementofen befindet, aufgefangen wird.

Falls aus dem Schwermetall während der Pyrolyse das Sulfid gebildet werden soll, kann die Pyrolyse auch in Gegenwart eines schwefelhaltigen Produktes (anderes Abfallprodukt) stattfinden oder aber es kann Schwefelwasserstoff eingeleitet werden, vorzugsweise zusammen mit einem Schutzgas (N₂, Argon, CO₂).

Versuche einer Pyrolyse von Polyethylen haben ergeben, dass bei einer Temperatur von 300°C und einer Pyrolysedauer von 80 Minuten keine Pyrolyse stattfindet. Bei 400°C findet dabei eine partielle Pyrolyse statt, wobei ein brauner Rückstand zurückbleibt, welcher 52 % des ursprünglichen Gewichts ausmacht. Bei Temperaturen von 450, 500 und 600°C, wurde beim Polyethylen eine totale Pyrolyse festgestellt, wobei ein Rückstand erhalten wurde, welcher 0,3, bzw. 0,5 % des ursprünglichen Gewichtes ausmachte. Betreffend Cadmiumsulfid wurde durch Versuche festgestellt, dass bei Temperaturen unterhalb 600°C kaum Cadmium aus dem Pyrolyseofen über die Gasphase entweicht.

## Patentansprüche

1. Verfahren zum Entsorgen von Sonderabfällen in flüssigem, pastösem oder festem Zustand, dadurch gekennzeichnet, dass die Sonderabfälle in einer ersten Stufe in einem Pyrolyseofen einer Pyrolyse unterworfen und anschiessend die dabei erhaltenen Pyrolysegase zur totalen Verbrennung direkt bei der Primärfeuerung in einen Zementofen geleitet werden.

2. Verfahren nach Anspruch 1, dadurch gekennzeichnet, dass die Pyrolysegase der Primärluft oder Sekundärluft (Kühlerabluft) zudosiert werden.

3. Verfahren nach Anspruch 1 oder 2, dadurch gekennzeichnet, dass die Pyrolysetemperatur im Pyrolseofen zwischen 400 - 900 °C, vorzugsweise 500- 700 °C, liegt.

4. Verfahren nach Anspruch 3, dadurch gekennzeichnet, dass die Pyrolysetemperatur durch eine teilweise Verbrennung des Pyrolysegutes im Sauerstoffunterschuss erreicht wird.

5. Verfahren nach einem der Ansprüche 1 bis 4, dadurch gekennzeichnet, dass das Pyrolysegas über geheizte Verbindungsleitungen vom Pyrolyseofen in den Zementofen geleitet wird, um eine Kondensation der Pyrolysegase zu vermeiden.

6. Verfahren nach nach einem der Ansprüche 1 bis 5, dadurch gekennzeichnet, dass die Pyrolysegase mit Katalysatoren in Kontakt gebracht werden, um sie in eine möglichst energiereiche Form unzuwandeln.

7. Verfahren nach einem der Ansprüche 1 bis 6, dadurch gekennzeichnet, dass der Pyrolyseofen zur Steuerung des Prozesses so ausgerüstet ist, dass beim Ausfall der Primärfeuerung im Zementofen automatisch der Pyrolyseprozess durch Einleiten eines Inertgases gestoppt wird.

8. Verfahren nach einem der Ansprüche 1 bis 7, dadurch gekennzeichnet, dass als Sonderabfälle Kunststoffprodukte entsorgt werden, welche Cadmium oder Quecksilber enthalten.

9. Verfahren nach Anspruch 8, dadurch gekennzeichnet, dass die Pyrolyse in Gegenwart von Schwefel, Selen oder Tellur in freier oder gebundener Form durchgeführt wird.

10. Verfahren nach Anspruch 8 oder 9, dadurch gekennzeichnet, dass die Pyrolysetemperatur zwischen 400 und 500°C liegt.

11. Verfahren nach einem der Ansprüche 8 bis 10, dadurch gekennzeichnet, dass Sonderabfälle aus Polyethylen, welches Cadmium enthält, entsorgt werden, wobei Schwefel in Form von Schwefelwasserstoff in den Pyrolyseofen eingeleitet wird.

12. Verfahren nach einem der Ansprüche 8 bis 10, dadurch gekennzeichnet, dass als Sonderabfall ein quecksilberhaltiger Kunststoff entsorgt wird, wobei die Pyrolyse in Gegenwart von Schwefel in freier oder gebundener Form, z.B. von H₂S durchgeführt wird.
